# EUROPÄISCHE PATENTSCHRIFT

(11) **EP 0 497 241 B1**
(45) Veröffentlichungstag und Bekanntmachung des Hinweises auf die Patenterteilung: **05.04.1995**
(21) Anmeldenummer: 92101261.3
(22) Anmeldetag: 27.01.1992
(51) Int. Cl.: C04B 35/10

(54) **Brauner Aluminiumoxid-Formkörper und Verfahren zu seiner Herstellung**
Brown alumina body and process for preparation
Corps façonné d'alumine brun et procédé de préparation

(30) Priorität: 30.01.1991 DE 4102667
(43) Veröffentlichungstag der Anmeldung: 05.08.1992
(73) Patentinhaber: Hoechst CeramTec Aktiengesellschaft, 95100 Selb (DE)
(72) Erfinder: Käfer, Dieter, W-8551 Igensdorf-Pettensiedel (DE); Schreiner, Sabine, Dr., W-8520 Erlangen (DE); Stingl, Peter, Dr., W-8560 Lauf (DE)
(74) Vertreter: Hoffmann, Peter, Dipl.-Chem.

(56) Entgegenhaltungen:
- EP-A- 0 406 847
- EP-A- 0 408 771
- DE-A- 1 671 095
- DE-A- 1 949 603
- DE-A- 3 117 008
- DE-C- 1 949 553
- US-A- 4 714 640
- WORLD PATENTS INDEX LATEST Week 8543, Derwent Publications Ltd., London, GB; AN 85-265773 & JP-A-60 176 966

## Beschreibung

Die vorliegende Erfindung betrifft Formkörper aus gesintertem Aluminiumoxid mit einem Gehalt von ca. 90 bis 98 Gew.-% Al₂O₃, die u.a. Eisenoxid enthalten und gute Korrosionseigenschaften und hohe mechanische Festigkeit besitzen.

Der Werkstoff Aluminiumoxid wird zunehmend im Apparatebau eingesetzt. Dabei spielt neben den mechanischen Eigenschaften, insbesondere der Widerstandsfähigkeit gegen Abrasion, vor allem die hohe chemische Beständigkeit von Aluminiumoxid eine wichtige Rolle. Daher werden aus diesem Material u.a. Dichtungen, Gleitringe oder Pumpenkolben gefertigt.

Im chemischen Apparatebau kommt es häufig vor, daß ein zu förderndes flüssiges Medium, beispielsweise eine starke Säure oder Lauge, gleichzeitig als Schmiermittel für bewegte keramische Teile dienen muß. Es liegt daher auf der Hand, daß die Korrosionseigenschaften der eingesetzten Keramik große Bedeutung haben.

Technisches Aluminiumoxid wird durch Sintern von Aluminiumoxid-Pulver unter Zusatz von organischen Hilfsstoffen und Sinterhilfsmitteln bei 1600-1750°C erhalten. Die Sinterhilfsmittel schmelzen dabei zu einer Glasphase, die die Aluminiumoxidkörner verbindet.

Es gibt bereits braungefärbte Wellen und Lagerringe für Pumpen aus Aluminiumoxid, die - nach Analysen der Anmelderin - kein Eisenoxid und kein Chromoxid aber Manganoxid als färbenden Bestandteil und eine SiO₂ enthaltende Glasphase enthalten (Gehalt an SiO₂: ca. 0,9 %). Dieser Werkstoff weist eine gute Korrosionsbeständigkeit auf.

DE-A-1 671 095 betrifft die Verbesserung der mechanischen Festigkeit von oxidkeramischem Material auf Basis von Aluminiumoxid mit Hilfe eines Zusatzes von 0,02-1% B2O3 und gegebenenfalls mit Zusätzen bis 1% MgO, MgF2 u/o SiO2 u/o bis zu 5% Cr2O3, Fe2O3 u/o Ti2O3. Diese Keramik eignet sich für die Anwendung als Schneidkeramik auch noch für mechanisch stark beanspruchte Bauteile, wie Pumpen, Gleitringe, Fadenführer usw.

Es bestand daher die Aufgabe, einen keramischen Werkstoff aus gesintertem Aluminiumoxid zu schaffen, der gegenüber Chemikalien, insbesondere wäßrigen Lösungen, einen vergleichbaren Korrosionswiderstand, und nach dem Hartbearbeiten eine gute Oberflächengüte aufweist. Vorzugsweise sollte zu seiner Herstellung aus toxischen Gründen pulverförmiges Manganoxid vermieden werden.

Überraschend wurde gefunden, daß die Zusammensetzung der Glasphase des Aluminiumoxid-Werkstoffs die Korrosionseigenschaften gegenüber wäßrigen Lösungen entscheidend beeinflußt und daß der Ersatz der in Al₂O₃-Werkstoffen üblichen Glasphase auf SiO₂-Basis durch eine Glasphase auf Basis Fe₂O₃ die Stabilität gegen chemische Korrosion günstig beeinflußt.

Erfindungsgemäß wurde nun ein Formkörper aus gesintertem Aluminiumoxid mit einem Gehalt von 90 bis 98 Gew.-% Al₂O₃ bereitgestellt, dessen kristalline Bestandteile im Gefüge eine mittlere Kristallitgröße von 5 bis 15 »m aufweisen. Er ist dadurch gekennzeichnet, daß er 1,2 bis 6 Gew.-% Eisenoxid (gerechnet als Fe₂O₃), 0,1 bis 0,3 % Magnesiumoxid, 0,1 bis 0,6 % Siliziumoxid, 0 bis 2,5 % Manganoxid (gerechnet als Mn₃O₄) und 0 bis 1,1 Gew.% Cr₂O₃ enthält. Vorzugsweise beträgt der Gehalt an Manganoxid 0 bis 1,3 %, insbesondere 0,9 bis 1,3 % und der Gehalt an Chromoxid 0 bis 0,6 %, insbesondere 0,2 bis 0,6 %. Der Gehalt an Al₂O₃ beträgt vorzugsweise 94,7 bis 95,7 %.

Es ist vorteilhaft, daß der erfindungsgemäße Werkstoff frei ist von Kupferoxid, das bei hohen Brenntemperaturen weitgehend verdampft und Ursache zu fleckigen Verfärbungen sein könnte.

Zur Herstellung von erfindungsgemäßen Formkörpern wird ein Gemisch von Oxiden oder Oxidvorläufern, das die oben angegebene Oxid-Zusammensetzung aufweist, zusammen mit organischen Zusätzen (z.B. Bindemittel, Plastifizierer) zu einem grünen Formkörper verformt, wobei als Aluminiumoxid vorzugsweise ein Produkt eingesetzt wird, das (nach dem Mahlen) eine mittlere Korngröße von 2,5 - 3,5 »m und eine mittlere Oberfläche von 0,6 - 1,3 m²/g aufweist. Das Mangan wird aus Gründen der Gewebehygiene vorzugsweise nicht als toxisches freies MnO₂ sondern als Mischoxid mit Eisen und Chrom in die Mischung eingebracht. Solche Mischoxide können durch Sintern der einzelnen Oxide, vorzugsweise in Gegenwart von Al₂O₃, erzeugt werden. Der Einsatz eines vorher gebrannten Mischoxids erlaubt niedrigere Brenntemperaturen als ein Gemisch der gleichen Oxide. Der geformte Grünkörper wird anschließend vorzugsweise bei 1600 bis 1650°C, gebrannt. Diese niedrige Sintertemperatur wird ermöglicht durch den Einsatz einer Eisenoxid enthaltenden Glasphase, die weitgehend frei ist von SiO₂. Das Magnesiumoxid soll die Ausbildung zu großer Kristalle beim Sintern unterdrücken, denn Ziel ist es, ein Gleichgewicht bei der Gefügeausbildung herzustellen, um die günstigen Korrosionseigenschaften des grobkristallinen Gefüges mit den mechanisch günstigeren Eigenschaftgen des feinkristallinen zu verknüpfen.

Der Anteil der Glasphase liegt je nach Al₂O₃-Gehalt bei 2 - 10 %. Die Glasphase besteht aus SiO₂, MgO, Cr₂O₃, Fe₂O₃ und Manganoxid.

Es ist aus J.R. Keski und I.B. Cutler, J. Am. Cer. Soc. 48, 653 bekannt, daß Manganoxid das Sintern von Aluminiumoxid beschleunigt. Dieser Zusatz ermöglicht es, die Brenntemperatur und die Brenndauer zu verringern, was wirtschaftlich von beachtlichem Vorteil ist.

Falls die mittlere Korngröße des eingesetzten Aluminiumoxids größer ist als 5 »m und/oder die mittlere Oberfläche kleiner ist als 0,8 m²/g, so steigt die benötigte Sintertemperatur an.

Als Oxidvorläufer können Hydroxide oder Salze wie Nitrate, Acetate und Oxalate von Eisen, Mangan und Chrom eingesetzt werden, die unter den Sintertemperaturen zu den Oxiden zerfallen.

Bei Einsatz von sehr inaktiven Tonerden (geringe Oberfläche und große Primärteilchen) muß die Sintertemperatur bis ca. 1750°C erhöht werden. Dies ist unwirtschaftlich und erhöht die Gefahr, daß die Kristalle des Aluminiumoxids während des Sinterns stark wachsen.

Das eingesetzte Fe₂O₃ soll einen möglichst hohen Reingehalt aufweisen, z.B. von 90 bis 96 % Fe₂O₃.

Um die oben genannten Eigenschaften zu erreichen, ist eine optimale Vermischung der Ausgangspulver notwendig.

Die eingesetzte Tonerde sollte einen Al₂O₃-Gehalt von mindestens 99,5 % Al₂O₃, vorzugsweise mindestens 99,7, noch besser 99,8 % aufweisen. Der Gehalt des Al₂O₃ an CaO soll maximal 0,03 % betragen. Der Gehalt des Al₂O₃ an Alkalioxid soll maximal 0,1 Gew.-% betragen. Die Oberfläche des Al₂O₃ liegt vorzugsweise bei 0,4 bis 2 m²/g, vorzugsweise bei 0,5 bis 1,5 m²/g, gemessen nach BET. Sinteraktive Tonerden (mit relativ niedriger Sintertemperatur) weisen eine Oberfläche von 0,8 bis 1,0 m²/g auf, weniger aktive eine von 1 bis 1,5 m²/g. Der d₅₀-Wert sollte (nach dem Mahlen) bei 2 bis 3,3 »m, vorzugsweise 2,3 - 3 »m liegen.

Der Chromgehalt ist nicht essentiell.

Die Magnesiumoxid-Komponente kann in Form von Speckstein eingearbeitet werden. SiO₂-Gehalte unter 0,3 % SiO₂ (bis 0,1 %) lassen sich nur mit sehr reinen Ausgangsprodukten erreichen. In der Praxis erhält man auch mit Gehalten von 0,3 - 0,6 % SiO₂ noch gute Ergebnisse. Gehalte an Siliziumoxid von über 0,6 % sind zu vermeiden. Man kann jedoch auch reines Magnesiumoxid (oder Magnesiumcarbonat) für die MgO-Komponente zusetzen.

Der Gehalt des keramischen Ansatzes an organischen Komponenten beträgt vorzugsweise 1,5 bis 4,5 Gew.-%, bezogen auf das Gesamtgewicht der Trockensubstanz.

Die Formgebung geschieht durch übliche keramische Formgebungsverfahren, beispielsweises axiales oder isostatisches Preßverfahren oder Strangpressen.

Um Bauteile aus dem neuen Aluminiumoxid-Material mit Gleit- und Dichtflächen herzustellen, kann man entsprechend geformte (z.B. isostatisch gepreßte) Grünkörper sintern, schleifen und dann polieren. Die angestrebte Rauhigkeit soll bei 0,2 bis 1 »m, insbesondere 0,3 bis 0,8, vorzugsweise ca. 0,4 »m liegen, der Traganteil bei 25-95 %.

Die Brandführung muß derart sein, daß schließlich eine hohe Sinterdichte von über 3,77 g/cm² bei möglichst feinem Gefüge entsteht. Die Sintertemperatur und Sinterdauer hängen daher auch vom Ofen (Größe, kontinuierlich/diskontinuierlich, Atmosphäre, usw.) und der Größe der hergestellten Formkörper ab.

Erfindungsgemäße Formkörper aus dem neuen Material eignen sich für eine Vielzahl von Einsatzzwecken, so z.B. als radiale oder axiale Gleitlager, Gleitringe in Gleitringdichtungen, Kolben oder Kolbenhülsen für Kolbenpumpen, Düsen zum Zerstäuben von Flüssigkeiten oder Suspensionen, Dicht- und Regelscheiben für das Steuern/Regeln von Flüssigkeitsströmen (z.B. in Ventilen und Armaturen) oder Gasströmen in Kleinmotoren (z.B. für Lüfter), Auskleidungen von Behältern und Rinnen, Verschleißflächen, in Mahlwerken oder als Führungselemente, z.B. als Fadenführer.

Die Erfindung wird durch die Beispiele näher erläutert.

### Beispiel 1

95 g Tonerde mit einer mittleren Teilchengröße (Primärkorn) von 1,5 -2,5 »m, Al₂O₃-Gehalt über 99,5 %, Gehalt an SiO₂ und Na₂O jeweils unter 0,1 %, BET-Oberfläche 0,5 - 1,5 m²/g werden mit folgenden Metalloxiden 10 min in einer Kugelmühle (Planetenmühle) naß vermahlen:
2,8 g Fe-Oxid, 1,2 g Mn-Oxid, 0,3 g Cr-Oxid, 0,2 g Mg-Oxid, 0,5 g SiO₂.
Als Mischflüssigkeit wird Wasser verwendet, der Mischbehälter besteht aus Al₂O₃ und enthält 100 g Mahlkugeln aus Al₂O₃ von etwa 10 mm Durchmesser.
Die Mischung wird anschließend mit einem organischen Bindemittel plastifiziert und bei 90°C im Trockenschrank abgetrocknet. Daraus wird ein verpreßbares Granulat hergestellt und der durch Sieben hergestellte Anteil unter 325 »m weiter verwendet. Aus dem Brechkorn werden mittels axialen Pressens Bauteile hergestellt, die in einem Brand bei etwa 1635°C dichtgesintert werden. Danach kann sich ein üblicher Hartbearbeitungsprozeß zur Endbearbeitung der Bauteile anschließen.

### Beispiel 2

Die Einwaage und Homogenisierung der Ausgangs-Komponenten erfolgt wie in Beispiel 1. Aus dem wässrigen Schlicker wird durch Sprühtrocknung ein Granulat hergestellt, das axial oder isostatisch zu einem Grünkörper verdichtet wird. Eine anschließende Grünbearbeitung ist möglich. Der Brand erfolgt oxidierend bei 1635°C, ein üblicher Hartbearbeitungsprozeß kann sich anschließen.

Der Werkstoff zeigt eine sehr gleichmäßige Gefügeausbildung mit meist runden Kristallen. Die mittlere Korngröße liegt bei ca. 8 »m. Das größte Korn liegt bei ca. 18 »m, das kleinste Korn bei ca. 2 »m.

## Patentansprüche

1. Formkörper aus gesintertem Aluminiumoxid mit einem Gehalt von 90 bis 98 Gew.-% Al₂O₃, dessen kristalline Bestandteile eine mittlere Korngröße von 5 bis 15 »m aufweisen, dadurch gekennzeichnet, daß er (in Gew.-%) 1,2 - 6 % Fe₂O₃, 0,1 - 0,3 % MgO, 0,1 - 0,6 % SiO₂, 0 - 2,5 % Manganoxid (gerechnet als Mn₃O₄) und 0 - 1,1 % Cr₂O₃ enthält.

2. Formkörper gemäß Anspruch 1, dadurch gekennzeichnet, daß er (in Gew.-%) 2,5 - 3 % Fe₂O₃, 0,1 - 0,3 % MgO, 0,1 - 0,6 % SiO₂, 0 - 1,3 % Manganoxid (gerechnet als Mn₃O₄) und 0 - 0,6 % Cr₂O₃ enthält.

3. Formkörper gemäß Anspruch 2, dadurch gekennzeichnet, daß er 0,9 - 1,3 % Manganoxid (gerechnet als Mn₃O₄) enthält.

4. Formkörper gemäß Anspruch 3, dadurch gekennzeichnet, daß er 0,2 - 0,6 % Cr₂O₃ enthält.

5. Verfahren zur Herstellung eines Formkörpers aus Aluminiumoxid gemäß Anspruch 1, dadurch gekennzeichnet, daß man feinverteiltes Aluminiumoxid mit anderen Oxiden oder Oxidvorläufern mischt, so daß das Gemisch die Zusammensetzung von Anspruch 1 aufweist, man Sinterhilfsstoffe und organische Zusätze zugibt, das Gemisch zu einem grünen Formkörper verformt, den Formkörper trocknet und bei 1600 bis 1750°C sintert.

6. Verfahren gemäß Anspruch 5, dadurch gekennzeichnet, daß man das Eisenoxid mindestens teilweise in Form eines Eisen, Chrom und Mangan enthaltenden Mischoxids einsetzt.

7. Verwendung eines Formkörpers gemäß Anspruch 1, als radiales oder axiales Gleitlager in Kreiselpumpen.

8. Verwendung eines Formkörpers gemäß Anspruch 1 als Gleitring in einer Gleitringdichtung.

9. Verwendung eines Formkörpers gemäß Anspruch 1 als Kolben oder Kolbenhülse für Kolbenpumpen.

10. Verwendung eines Formkörpers gemäß Anspruch 1 als Düse zum Zerstäuben von Flüssigkeit oder Suspension.

11. Verwendung eines Formkörpers gemäß Anspruch 1 als Dicht und Regelscheibe für das Steuern/Regeln von Flüssigkeitsströmen oder Gasströmen.

12. Verwendung eines Formkörpers gemäß Anspruch 1 in Kleinmotoren.

13. Verwendung eines Formkörpers gemäß Anspruch 1 als Auskleidung von Behältern.

14. Verwendung eines Formkörpers gemäß Anspruch 1 in Mahlwerken.

15. Verwendung eines Formkörpers gemäß Anspruch 1 als Fadenführer.

## Claims

1. A molding of sintered aluminum oxide containing 90 to 98 % by weight of Al₂O₃, the crystalline constituents of which have an average particle size of 5 to 15 »m, which molding contains (in % by weight) 1.2 - 6 % of Fe₂O₃, 0.1 - 0.3 % of MgO, 0.1 - 0.6 % of SiO₂, 0 - 2.5 % of manganese oxide (calculated as Mn₃O₄) and 0 - 1.1 % of Cr₂O₃.

2. A molding as claimed in claim 1, which contains (in % by weight) 2.5 - 3 % of Fe₂O₃, 0.1 - 0.3 % of MgO, 0.1 - 0.6 % of SiO₂, 0 - 1.3 % of manganese oxide (calculated as Mn₃O₄) and 0 - 0.6 % of Cr₂O₃.

3. A molding as claimed in claim 2, which contains 0.9 - 1.3 % of manganese oxide (calculated as Mn₃O₄).

4. A molding as claimed in claim 3, which contains 0.2 - 0.6 % of Cr₂O₃.

5. A process for the production of a molding of aluminum oxide as claimed in claim 1, which comprises mixing finely divided aluminum oxide with other oxides or oxide precursors so that the mixture has the composition of claim 1, adding sinter aids and organic additives, shaping the mixture to form a green molding and drying the molding and sintering at 1,600 to 1,750°C.

6. The process as claimed in claim 5, wherein at least part of the iron oxide used is in the form of a mixed oxide containing iron, chromium and manganese.

7. The use of a molding as claimed in claim 1 as radial or axial slide bearing in centrifugal pumps.

8. The use of a molding as claimed in claim 1 as slide ring in a rotating mechanical seal.

9. The use of a molding as claimed in claim 1 as piston or piston casing for reciprocating pumps.

10. The use of a molding as claimed in claim 1 as a nozzle for atomizing liquid or suspension.

11. The use of a molding as claimed in claim 1 as seal and control disk for the regulation/control of liquid flows or gas flows.

12. The use of a molding as claimed in claim 1 in low-power motors.

13. The use of a molding as claimed in claim 1 as vessel lining.

14. The use of a molding as claimed in claim 1 in mills.

15. The use of a molding as claimed in claim 1 as thread guide.

## Revendications

1. Corps moulé formé d'alumine frittée possédant une teneur de 90 à 98 % en poids de Al₂O₃ et dont les constituants cristallins possèdent des grains d'une taille moyenne de 5 à 15 »m, caractérisé en ce qu'il contient (en % en poids) 1,2 - 6 % de Fe₂O₃, 0,1 - 0,3 % de MgO, 0,1 - 0,6 % de SiO₂, 0 - 2,5 % d'oxyde de manganèse (calculés en tant que Mn₃O₄) et 0 - 1,1 % de Cr₂O₃.

2. Corps moulé selon la revendication 1, caractérisé en ce qu'il contient (en % en poids) 2,5 - 3 % de Fe₂O₃, 0,1 - 0,3 % de MgO, 0,1 - 0,6 % de SiO₂, 0,1 - 1,3 % d'oxyde de manganèse (calculés en tant que Mn₃O₄) et 0 - 0,6 % de Cr₂O₃.

3. Corps moulé selon la revendication 2, caractérisé en ce qu'il contient 0,9 - 1,3 % d'oxyde de manganèse (calculés en tant que Mn₃O₄).

4. Corps moulé selon la revendication 3, caractérisé en ce qu'il contient 0,2 - 0,6 % de Cr₂O₃.

5. Procédé pour fabriquer un corps moulé constitué d'alumine selon la revendication 1, caractérisé en ce qu'on mélange de l'alumine finement divisée à d'autres oxydes ou à d'autres précurseurs d'oxydes, de manière que le mélange possède la composition selon la revendication 1, qu'on ajoute des substances auxiliaires de frittage et des additifs organiques, qu'on donne au mélange la forme d'un corps moulé à vert, qu'on sèche le corps moulé et qu'on le fritte entre 1600 et 1750°C.

6. Procédé selon la revendication 5, caractérisé en ce qu'on insère l'oxyde de fer au moins en partie sous la forme d'un oxyde mixte contenant du fer, du chrome et du manganèse.

7. Utilisation d'un corps moulé selon la revendication 1, en tant que palier lisse radial ou axial dans des pompes centrifuges.

8. Utilisation d'un corps moulé selon la revendication 1, en tant que bague coulissante dans une garniture d'étanchéité à bague coulissante.

9. Utilisation d'un corps moulé selon la revendication 1, en tant que piston ou chemise de piston pour des pompes à pistons.

10. Utilisation d'un corps moulé selon la revendication 1, en tant que buse pour la pulvérisation d'un liquide ou d'une suspension.

11. Utilisation d'un corps moulé selon la revendication 1, en tant que disque d'étanchéité et de régulation pour la commande/la régulation d'écoulements de liquide ou d'écoulements de gaz.

12. Utilisation d'un corps moulé selon la revendication 1 dans des petits moteurs.

13. Utilisation d'un corps moulé selon la revendication 1, en tant qu'habillage de récipients.

14. Utilisation d'un corps moulé selon la revendication 1 dans des broyeurs.

15. Utilisation d'un corps moulé selon la revendication 1, en tant que guide-fil.
